# FASCICULE DE BREVET EUROPEEN

(11) **EP 3 831 634 B1**
(45) Date de publication et mention de la délivrance du brevet: **26.02.2025**
(21) Numéro de dépôt: 20211525.9
(22) Date de dépôt: 03.12.2020
(51) Int. Cl.: B60K 13/04, B62D 21/15, F01N 13/08

(54) **MOYEN DE GUIDAGE D'UN ÉLÉMENT PAR RAPPORT À UN TRAIN ARRIÈRE DE VÉHICULE EN CAS DE CHOC**
MITTEL ZUR LENKUNG EINES ELEMENTS IN BEZUG AUF EINE HINTERACHSE EINES FAHRZEUGS IM FALLE EINES AUFPRALLS
MEANS FOR GUIDING AN ELEMENT IN RELATION TO A REAR END OF A VEHICLE IN THE EVENT OF A CRASH

(30) Priorité: 04.12.2019 FR 1913740
(43) Date de publication de la demande: 09.06.2021
(73) Titulaire: Renault s.a.s, 92100 Boulogne Billancourt (FR)
(72) Inventeur: WILLEMENOT, YOHANN, 92350 LE PLESSIS ROBINSON (FR)
(74) Mandataire: Renault Group

(56) Documents cités:
- WO-A1-2018/207687
- FR-A1- 3 067 672
- JP-A- 2004 148 981
- JP-A- H0 427 708

## Description

### Domaine Technique de l'invention

L'invention concerne un agencement comprenant un moyen de guidage d'un élément d'un véhicule en cas de choc arrière. L'invention porte aussi sur un véhicule comprenant un tel agencement.

### Etat de la technique antérieure

Un véhicule, en particulier un véhicule automobile, équipé d'un moteur à combustion interne seul ou d'une motorisation hybride, comprend généralement des pièces telles qu'un réservoir à carburant et/ou une batterie de traction et/ou propulsion et/ou un chargeur d'une telle batterie. De telles pièces sont généralement agencées au niveau d'un berceau arrière. En cas de choc arrière, il convient d'éviter que ces pièces ne soient endommagées. En effet, de telles pièces, si elles sont endommagées, peuvent engendrer et/ou participer à un départ de feu voire un incendie et/ou un choc électrique dangereux aussi bien pour les occupants que pour les secours.

Une telle situation n'est pas acceptable. Il conviendrait d'éviter tout risque d'incendie et/ou de choc électrique suite à un accident survenu sur un véhicule automobile. Un exemple d'agencement est divulgué par EP3608207.

### Présentation de l'invention

Le but de l'invention est de fournir un agencement remédiant aux inconvénients ci-dessus. En particulier, l'invention permet de guider un élément sous le berceau arrière en cas de choc arrière.

### Résumé de l'invention

Pour atteindre cet objectif, l'invention porte sur un agencement pour véhicule, notamment pour véhicule automobile, l'agencement comprenant un berceau arrière, un élément s'étendant derrière le berceau arrière, notamment s'étendant au moins partiellement transversalement ou sensiblement transversalement, l'agencement comprenant un moyen de guidage destiné à guider l'élément sous le berceau arrière en cas d'impact au niveau de l'arrière ou sensiblement de l'arrière d'un tel véhicule, et caractérisé en ce que le moyen de guidage comprend une rampe fixée sur une face supérieure du berceau arrière.

La rampe peut comprendre une face de contact destinée à venir au contact de l'élément puis guider l'élément lors d'un impact à l'arrière d'un tel véhicule.

La face de contact peut être plane ou sensiblement plane.

La face de contact peut s'étendre transversalement ou sensiblement transversalement et peut être orientée vers l'avant et vers le bas avec un angle compris entre 25 degrés et 65 degrés, notamment de l'ordre de 45 degrés, par rapport à un plan vertical et transversal.

La rampe peut être une plaque, notamment une plaque pliée comprenant une première partie s'étendant dans un plan parallèle au sol ou sensiblement parallèle au sol et une deuxième partie s'étendant depuis une arête arrière ou sensiblement depuis une arête arrière, notamment une deuxième partie comprenant une face de contact.

Le moyen de guidage peut être en acier et/ou en alliage d'aluminium et/ou en matériau composite et/ou en matériau plastique.

L'élément peut être un caisson d'un système d'échappement d'un moteur à combustion interne d'un tel véhicule.

L'invention porte encore sur un véhicule, notamment un véhicule automobile, comprenant un agencement tel que défini précédemment.

### Présentation des figures

Ces objets, caractéristiques et avantages de la présente invention seront exposés en détail dans la description suivante d'un mode de réalisation fait à titre non-limitatif en relation avec les figures jointes parmi lesquelles :
[Fig. 1] La figure 1 est une vue schématique d'un véhicule comprenant un agencement selon un mode de réalisation.
[Fig. 2] La figure 2 est une vue schématique de l'agencement selon un mode de réalisation en position normale.
[Fig. 3] La figure 3 est une vue schématique de l'agencement selon le mode de réalisation après un choc arrière.
[Fig. 4] La figure 4 est une vue en perspective de l'agencement selon le mode de réalisation en position normale.
[Fig. 5] La figure 5 est une vue en perspective de l'agencement selon le mode de réalisation en début de choc arrière.
[Fig. 6] La figure 6 est vue en perspective de l'agencement selon le mode de réalisation en cours de choc arrière important.
[Fig. 7] La figure 7 est une vue en perspective de l'agencement selon le mode de réalisation après un choc arrière important.

### Description détaillée

La direction selon laquelle un véhicule automobile se déplace en ligne droite est définie comme étant la direction longitudinale X. Par convention, la direction perpendiculaire à la direction longitudinale, située dans un plan parallèle au sol, est nommée direction transversale Y. La troisième direction, perpendiculaire aux deux autres, est nommée direction verticale Z. Ainsi, on utilise un repère direct XYZ dans lequel X est la direction longitudinale dans le sens avant-arrière du véhicule, donc dirigée vers l'arrière, Y est la direction transversale dirigée vers la droite et Z est la direction verticale dirigée vers le haut. Le sens avant correspond au sens dans lequel le véhicule automobile se déplace habituellement dans la direction longitudinale et est opposé au sens arrière.

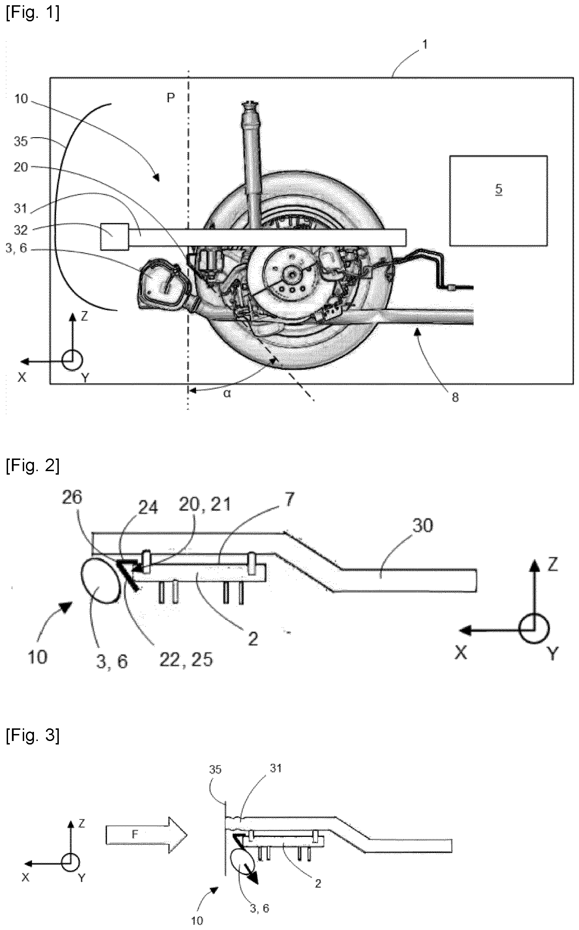

La figure 1 illustre schématiquement un véhicule 1, en particulier un véhicule automobile, selon un mode de réalisation. Le véhicule 1 est par exemple de type hybride, c'est-à-dire qu'il comprend un moteur à combustion interne 5 et un moteur électrique pour sa traction et/ou sa propulsion. Alternativement le véhicule 1 comprend seulement un moteur à combustion interne 5 pour sa traction et/ou sa propulsion. Alternativement encore, le véhicule 1 est électrique et comprend un moteur électrique pour sa traction et/ou sa propulsion. Le véhicule 1 comprend de préférence un berceau arrière 2. Par exemple, comme illustré sur la figure 2, le véhicule comprend une caisse 30 et le berceau arrière 2 est agencé sous la caisse 30, de préférence à l'arrière de la caisse. Par exemple, comme illustré sur la figure 1, la caisse 30 comprend au moins un longeron 31 s'étendant longitudinalement ou sensiblement longitudinalement. De préférence le véhicule 1 comprend une face arrière 35 ou pare-chocs arrière s'étendant transversalement ou sensiblement transversalement derrière une extrémité arrière de la caisse. L'extrémité arrière de la caisse comprend par exemple une traverse 32.

Le véhicule 1 comprend un agencement 10 selon un mode de réalisation.

Comme illustré sur les figures 2 et 3, l'agencement 10 comprend le berceau arrière 2. L'agencement 10 comprend encore un élément 3. Par exemple, l'élément 3 s'étend derrière le berceau arrière 2. De préférence, l'élément 3 s'étend au moins partiellement transversalement ou sensiblement transversalement.

L'agencement 10 comprend encore un moyen de guidage 20. Le moyen de guidage 20 est de préférence destiné à guider et/ou à orienter l'élément 3 sous le berceau arrière 2 en cas d'impact F au niveau de l'arrière ou sensiblement de l'arrière du véhicule 1.

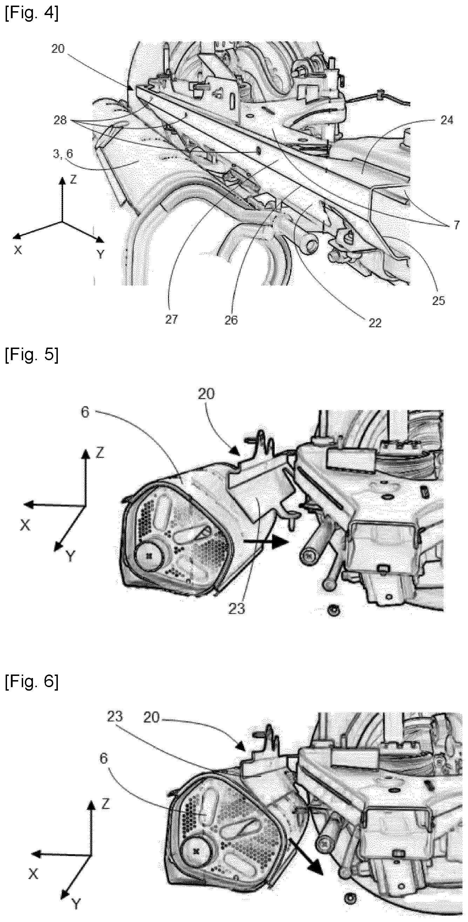

De préférence, le moyen de guidage 20 comprend une rampe 21 ou guide ou traverse. La rampe 21 est de préférence fixée au niveau du berceau arrière 2. Par exemple, la rampe est fixée sur une face supérieure 7 du berceau 2 comme illustré sur les figures 2 et 4 en particulier. La fixation de la rampe sur le berceau se fait par exemple par soudage et/ou par un système de vis/écrous et/ou par un système de vis / taraudage et ou par rivetage.

De préférence, la rampe 21 comprend une face de contact 22 destinée à venir au contact de l'élément 3. De préférence encore, cette face de contact 22 est encore destinée à guider l'élément 3 lors d'un impact à l'arrière du véhicule 1 comme il sera expliqué par la suite.

Avantageusement, comme illustré en particulier sur la figure 4 en situation normale autrement dit avant un impact arrière, la face de contact 22 est plane ou sensiblement plane.

Comme illustré sur la figure 1, de préférence la face de contact 22 s'étend transversalement ou sensiblement transversalement. Avantageusement, la face de contact 22 est orientée vers l'avant et vers le bas avec un angle α compris entre 25 degrés et 65 degrés par rapport à un plan vertical et transversal P. De préférence, l'angle α est de l'ordre de 45 degrés par rapport au plan P.

Comme illustré en particulier sur les figures 5, 6 et 7, la rampe 21 est de préférence une plaque 23. Par exemple la plaque 23 est pliée de sorte à comprendre une première partie 24 s'étendant dans un plan parallèle au sol ou sensiblement parallèle au sol, c'est-à-dire dans un plan transversal et longitudinal ou sensiblement transversal et longitudinal. La plaque 23 est de préférence pliée de sorte à comprendre une deuxième partie 25 s'étendant depuis une arête arrière 26, ou sensiblement depuis une arête arrière 26, comme illustré en particulier sur les figures 2 et 4. Avantageusement, la deuxième partie 25 comprend la face de contact 22. Par exemple, une troisième partie 27, illustrée en particulier sur la figure 4, s'étend, par exemple dans un plan vertical et transversal ou sensiblement vertical et transversal, entre la première partie 24 et la deuxième partie 25. Avantageusement, la première partie 24 et/ou la deuxième partie 25 et/ou la troisième partie 27 sont planes ou sensiblement planes. Par exemple la troisième partie 27 comprend des orifices 28 destinés aux passages de vis pour fixer le moyen de guidage sur le berceau. En complément ou alternativement, la première partie 24 peut comprendre des orifices destinés aux passages de vis pour fixer le moyen de guidage sur le berceau.

Par exemple, le moyen de guidage 20 est en acier et/ou en alliage d'aluminium et/ou en matériau composite et/ou en matériau plastique. En cas de moyen de guidage en acier, l'épaisseur de la tôle permettant son obtention, de préférence par pliage, est par exemple compris entre 1,5 mm et 5 mm.

En cas de véhicule comprenant un moteur à combustion interne 5, l'élément 3 est de préférence un caisson 6 ou silencieux ou pot d'échappement d'un système d'échappement 8 du moteur à combustion interne 5.

Alternativement, l'élément 3 peut être une batterie de traction et/ou propulsion, tout particulièrement en cas de véhicule hybride ou électrique.

Alternativement encore, l'élément 3 peut être un volume de coffre additionnel peu ou pas déformable, un caisson de basse de système audio du véhicule, voire une ou des batteries additionnelles.

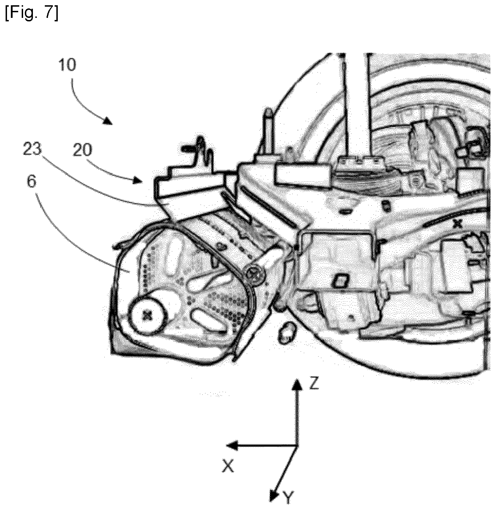

Ainsi, en cas de crash ou collision ou choc ou impact arrière important F au niveau du pare-chocs arrière 35, le pare-chocs se déforme et/ou se casse engendrant ensuite une éventuelle déformation de la traverse 32 et/ou du ou des longerons 31. Cet impact conduit encore le caisson 6 (ou l'élément 3) à se translater selon la direction longitudinale comme illustré sur la figure 5, éventuellement jusqu'au contact du moyen de guidage 20 de type rampe 21 de préférence. Le caisson 6 vient alors s'appuyer contre le moyen de guidage, notamment contre la face de contact 22. En cas de choc important, si l'énergie n'est pas absorbée par cette translation longitudinale vers l'avant du caisson, le caisson 6 poursuit son déplacement vers l'avant et vers le bas en étant guidé par le moyen de guidage 20. En effet, avantageusement, le moyen de guidage est fixé solidement et ne se déforme pas ou peu, même sous un effort important transmis par le caisson 6. Ainsi, le caisson suit et/ou frotte et/ou glisse sur au moins une partie de la face de contact 22 comme illustré sur la figure 6. Une fois l'énergie de l'impact absorbée, le caisson 6 se retrouve sous le train arrière, en particulier sous le berceau arrière 2, par exemple sous un essieu de roues arrière, comme illustré sur la figure 7 illustrant la configuration après un impact arrière important.

Ainsi l'agencement 10 vise à inciter l'élément 3 à subir un phénomène de « sous-marinage » en cas de choc à l'arrière du véhicule, c'est-à-dire à entraîner l'élément 3 vers le sol.

L'échappement ne se coince donc pas contre l'arrière du berceau. A noter qu'en cas de véhicule hybride notamment, une batterie de traction et/ou propulsion, voire un chargeur, sont généralement logés dans l'environnement ou la zone de l'arrière du berceau, par exemple dans un bac en plastique. Ainsi, le choc n'engendre pas d'écrasement du caisson 6 contre le berceau et/ou contre le chargeur et/ou contre la batterie. En effet, le caisson ne vient pas taper contre l'une de ces pièces. En outre, en cas de réservoir à carburant agencé par exemple au-dessus du berceau arrière, le réservoir n'est pas impacté. Le risque de choc électrique et/ou de départ de feu, voire d'incendie, est donc écarté.

Comme évoqué, de préférence, certaines pièces de la partie arrière du véhicule sont prévues pour se déformer en cas d'impact arrière, ces pièces étant donc de préférence dimensionnées pour absorber une certaine quantité d'énergie en se déformant lors d'un choc. C'est par exemple le cas du pare-chocs 35 et/ou du longeron 31 comme illustré sur la figure 3. A l'inverse, des pièces, comme l'élément 3, ont de préférence des cinématiques de déplacement souhaités en cas d'impact comme expliqué précédemment. De préférence, les pièces amenées à se déplacer et peu voire ne pas se déformer, sont celles qui n'absorbent que très peu d'énergie lors d'un choc.

Ainsi, selon la configuration des différentes pièces dans la partie arrière de véhicule comprenant par exemple le berceau arrière 2, un ou des longeron(s) 31, la traverse 32, le pare-chocs 35, le caisson d'échappement 6, soit une déformation, soit un déplacement est prévu en cas de choc arrière.

En remarque, la solution selon l'invention atteint donc l'objectif recherché d'éviter tout risque d'incendie et/ou de choc électrique suite à un accident engendrant un choc arrière sur un véhicule automobile et présente les avantages suivants :
- le coût est particulièrement faible, le dispositif étant simple techniquement ;
- elle peut être adaptée pour guider vers une direction souhaitée tout type de pièce peu déformable voire non déformable lors d'un choc, et ce dans tous types de véhicules, notamment des véhicules à moteur à combustion interne, des véhicules électriques ou hybrides.

## Revendications

1. Agencement (10) pour véhicule (1), notamment pour véhicule automobile, l'agencement (10) comprenant :
un berceau arrière (2),
un élément (3) s'étendant derrière le berceau arrière (2), notamment s'étendant au moins partiellement transversalement ou sensiblement transversalement, l'agencement (10) comprenant un moyen de guidage (20) destiné à guider l'élément (3) sous le berceau arrière (2) en cas d'impact au niveau de l'arrière ou sensiblement de l'arrière d'un tel véhicule (1), **caractérisé en ce que** le moyen de guidage (20) comprend une rampe (21) fixée sur une face supérieure (7) du berceau arrière (2).

2. Agencement (10) selon la revendication précédente, **caractérisé en ce que** la rampe (21) comprend une face de contact (22) destinée à venir au contact de l'élément (3) puis guider l'élément (3) lors d'un impact à l'arrière d'un tel véhicule (1).

3. Agencement (10) selon la revendication précédente, **caractérisé en ce que** la face de contact (22) est plane ou sensiblement plane.

4. Agencement (10) selon l'une des revendications 2 ou 3, **caractérisé en ce que** la face de contact (22) s'étend transversalement ou sensiblement transversalement et est orientée vers l'avant et vers le bas avec un angle (α) compris entre 25 degrés et 65 degrés, notamment de l'ordre de 45 degrés, par rapport à un plan vertical et transversal (P).

5. Agencement (10) selon l'une des revendications précédentes, **caractérisé en ce que** la rampe (21) est une plaque (23), notamment une plaque (23) pliée comprenant une première partie (24) s'étendant dans un plan parallèle au sol ou sensiblement parallèle au sol et une deuxième partie (25) s'étendant depuis une arête arrière (26) ou sensiblement depuis une arête arrière (26), notamment une deuxième partie (25) comprenant une face de contact (22).

6. Agencement (10) selon l'une des revendications précédentes, **caractérisé en ce que** le moyen de guidage (20) est en acier et/ou en alliage d'aluminium et/ou en matériau composite et/ou en matériau plastique.

7. Agencement (10) selon l'une des revendications précédentes, **caractérisé en ce que** l'élément (3) est un caisson (6) d'un système d'échappement (8) d'un moteur à combustion interne (5) d'un tel véhicule (1).

8. Véhicule (1), notamment véhicule automobile, **caractérisé en ce qu'**il comprend un agencement (10) selon l'une des revendications précédentes.

## Patentansprüche

1. Anordnung (10) für ein Fahrzeug (1), insbesondere für ein Kraftfahrzeug, wobei die Anordnung (10) umfasst:
einen hinteren Hilfsrahmen (2),
ein sich hinter dem hinteren Hilfsrahmen (2) erstreckendes Element (3), das sich insbesondere wenigstens teilweise quer oder im Wesentlichen quer erstreckt, wobei die Anordnung (10) ein Führungsmittel (20) umfasst, das dazu bestimmt ist, das Element (3) im Falle eines Aufpralls am Heck oder im Wesentlichen am Heck eines solchen Fahrzeugs (1) unter dem hinteren Hilfsrahmen (2) zu führen, **dadurch gekennzeichnet, dass** das Führungsmittel (20) eine Rampe (21) umfasst, die auf einer Oberseite (7) des hinteren Hilfsrahmens (2) befestigt ist.

2. Anordnung (10) nach dem vorhergehenden Anspruch, **dadurch gekennzeichnet, dass** die Rampe (21) eine Kontaktfläche (22) umfasst, die dazu bestimmt ist, mit dem Element (3) in Kontakt zu kommen und dann das Element (3) bei einem Aufprall auf das Heck eines solchen Fahrzeugs (1) zu führen.

3. Anordnung (10) nach dem vorhergehenden Anspruch, **dadurch gekennzeichnet, dass** die Kontaktfläche (22) eben oder im Wesentlichen eben ist.

4. Anordnung (10) nach einem der Ansprüche 2 oder 3, **dadurch gekennzeichnet, dass** sich die Kontaktfläche (22) quer oder im Wesentlichen quer erstreckt und nach vorn und nach unten ausgerichtet ist, mit einem Winkel (α) zwischen 25 Grad und 65 Grad, insbesondere in der Größenordnung von 45 Grad, bezüglich einer vertikalen und quer verlaufenden Ebene (P).

5. Anordnung (10) nach einem der vorhergehenden Ansprüche, **dadurch gekennzeichnet, dass** die Rampe (21) eine Platte (23) ist, insbesondere eine umgebogene Platte (23), die einen ersten Teil (24) umfasst, der sich in einer zum Boden parallelen oder zum Boden im Wesentlichen parallelen Ebene erstreckt, und einen zweiten Teil (25), der sich von einer hinteren Kante (26) oder im Wesentlichen von einer hinteren Kante (26) aus erstreckt, insbesondere einen zweiten Teil (25), der eine Kontaktfläche (22) umfasst.

6. Anordnung (10) nach einem der vorhergehenden Ansprüche, **dadurch gekennzeichnet, dass** das Führungsmittel (20) aus Stahl und/oder aus Aluminiumlegierung und/oder aus Verbundmaterial und/oder aus Kunststoff besteht.

7. Anordnung (10) nach einem der vorhergehenden Ansprüche, **dadurch gekennzeichnet, dass** das Element (3) ein Behälter (6) einer Abgasanlage (8) eines Verbrennungsmotors (5) eines solchen Fahrzeugs (1) ist.

8. Fahrzeug (1), insbesondere Kraftfahrzeug, **dadurch gekennzeichnet, dass** es eine Anordnung (10) nach einem der vorhergehenden Ansprüche umfasst.

## Claims

1. Arrangement (10) for a vehicle (1), notably for a motor vehicle, the arrangement (10) comprising:
a rear subframe (2),
an element (3) extending behind the rear subframe (2), notably extending at least partially transversely or substantially transversely, the arrangement (10) comprising guide means (20) for guiding the element (3) under the rear subframe (2) in the event of an impact at the rear or substantially at the rear of such a vehicle (1), **characterized in that** the guide means (20) comprise a ramp (21) fastened to an upper face (7) of the rear subframe (2).

2. Arrangement (10) according to the preceding claim, **characterized in that** the ramp (21) comprises a contact face (22) intended to come into contact with the element (3) and then to guide the element (3) during an impact at the rear of such a vehicle (1).

3. Arrangement (10) according to the preceding claim, **characterized in that** the contact face (22) is flat or substantially flat.

4. Arrangement (10) according to one of Claims 2 and **3, characterized in that** the contact face (22) extends transversely or substantially transversely and is oriented forwards and downwards at an angle (α) of between 25 degrees and 65 degrees, notably of the order of 45 degrees, relative to a vertical and transverse plane (P).

5. Arrangement (10) according to one of the preceding claims, **characterized in that** the ramp (21) is a plate (23), notably a folded plate (23) comprising a first part (24) extending in a plane parallel to the ground or substantially parallel to the ground and a second part (25) extending from a rear edge (26) or substantially from a rear edge (26), notably, a second part (25) comprising a contact face (22).

6. Arrangement (10) according to one of the preceding claims, **characterized in that** the guide means (20) are made of steel and/or aluminium alloy and/or composite material and/or plastic material.

7. Arrangement (10) according to one of the preceding claims, **characterized in that** the element (3) is a housing (6) of an exhaust system (8) of an internal-combustion engine (5) of such a vehicle (1).

8. Vehicle (1), notably a motor vehicle, **characterized in that** it comprises an arrangement (10) according to one of the preceding claims.
